# EUROPEAN PATENT APPLICATION

(11) **EP 2 937 833 A1**
(43) Date of publication of application: **28.10.2015**
(21) Application number: 13860401.2
(22) Date of filing: 21.06.2013
(51) Int. Cl.: G06Q 50/20

(54) **ONLINE LEARNING MANAGEMENT SYSTEM AND METHOD THEREFOR**

(30) Priority: 04.12.2012 KR 20120139681
(71) Applicant: Lee, Hae Deok, Seoul 140-774 (KR)
(72) Inventor: Lee, Hae Deok, Seoul 140-774 (KR)
(74) Representative: Brevalex
(86) International application number: PCT/KR2013/005517
(87) International publication number: WO 2014/088173

(57) **Abstract**

Provided is an online learning management system comprising: a student member terminal which can search for study problems by type and can input answers in a learning management server by logging into the learning management server, and which can check study results on the inputted answers for respective problems; a teacher member terminal which can input the study problems by type and solutions for the respective problems in the learning management server by logging into the learning management server, and which can check study results of a student member for which the teacher member is responsible; a guardian member terminal which can check the study results for the student member under the care of the guardian member by logging into the learning management server; and the learning management server which includes a member information database for storing member registration information for the logging-in of the student member terminal, the teacher member terminal, and the guardian member terminal, a login processing unit for processing the logging-in of the terminals through the member registration information of the member information database, a problem database for storing study problems by type and solutions for the respective problems, a learning result database for storing study results of respective student members, and a control unit which provides information selected according to the usage rights through the logging-in of the terminals by being connected to the member information database, the login processing unit, the problem database, and the learning result database, wherein the control unit controls the provision, to the student member terminal, of level study problems by subject which are set according to study results for diagnostic study problems by subject which are set to determine a level of the student member among the study problems by type. In this case, the control unit of the learning management server determines linked level study problems by subject according to the study results for the level study problems by subject, which are set by time. Thus, as configured above, the present invention enables: respective student members to begin studying at levels appropriate for each student member in respective subjects by setting suitable questions for the academic standards of the student members and by conducting systematic management according to the learning results; and balanced study to be carried out without being biased towards one subject within a set period such that the academic achievements of student members can be maximized.

## Description

### TECHNICAL FIELD

The present invention relates to an online learning management system and a method thereof which can perform automatic learning management by using an on line, and more particularly, to an online learning management system and a method thereof which can more efficiently perform learning management by enabling a student to learn a mathematical learning for each field in balance and can perform a bilateral communication between a teacher and a student.

### [Background Art]

A general online learning system is a system which enhances academic achievements by providing various learning problems to student members which are registered online.

However, an online learning system in the related art provides various types of problems as proposed in Korean Patent Unexamined Publication No. 10-2004-00067502 (Unexamined publication date: July 30, 2004), but particularly, there is a problem in that in mathematical learning, setting suitable questions for the academic standards of the student members and management according to the learning results are not systematically conducted.

(Patent Document 1) Korean Patent Unexamined Publication No. 10-2004-00067502 (Unexamined publication date: July 30, 2004).

### [Disclosure]

### [Technical Problem]

The present invention is directed to providing an online learning management system and a method thereof which provide problems by subject of mathematics programmed in the online learning system to be suitable for the academic standards of the student members by one to one, draws balanced study to be carried out without being biased towards one subject in a mathematical study of the student according to the study results, and sets suitable questions for the academic standards of the student members and conducts systematic management according to the learning results such as bilateral video learning between the teacher and the student and communication with parents of the students such that the academic achievements of student members can be maximized.

### [Technical Solution]

One aspect of the present invention provides an online learning management system comprising: a student member terminal which can search for study problems by type and can input answers in a learning management server by logging into the learning management server, and which can check study results on the inputted answers for respective problems; a teacher member terminal which can input the study problems by type and solutions for the respective problems in the learning management server by logging into the learning management server, and which can check study results of a student member for which the teacher member is responsible; a guardian member terminal which can check the study results for the student member under the care of the guardian member by logging into the learning management server; and the learning management server which includes a member information database for storing member registration information for the logging-in of the student member terminal, the teacher member terminal, and the guardian member terminal, a login processing unit for processing the logging-in of the terminals through the member registration information of the member information database, a problem database for storing study problems by type and solutions for the respective problems, a learning result database for storing study results of respective student members, and a control unit which provides information selected according to the usage rights through the logging-in of the terminals by being connected to the member information database, the login processing unit, the problem database, and the learning result database, wherein the control unit controls the provision, to the student member terminal, of level study problems by subject which are set according to study results for diagnostic study problems by subject which are set to determine a level of the student member among the study problems by type.

Here, the control unit of the learning management server may determine linked level study problems by subject according to the study results for the level study problems by subject, which are set by time.

In this case, in the control unit of the learning management server, the determining of the linked level study problems by subject which are next set may be to determine a level study problem by subject which is set at a next time to be provided when a study result for the set level study problem by subject is a reference score or more, determine a level study problem by subject which is set at a current time to be repetitively provided when the study result is less than the reference score, and determine a predetermined linked level study problem by subject which is set at a previous time to be provided when the study result for the level study problem by subject which is set at a repetitively provided time is less than the reference score.

Further, the online learning management system may further include a manager terminal which can inquire register information and the study result of all members and input, correct, or delete the study problems by type and the answer of each problem to the learning management server, by logging into the learning management server.

Further, the level study problems by subject may be configured by five level study problems by subject of mathematics for number and arithmetic problems, figure problems, measurement problems, probability and statistics problems, and regularity problems.

Further, the study problems by type may further include hint information and commentary information for each problem, and the control unit of the learning management server may control to provide a next problem in the case of a correct answer and provide hint information in the case of an incorrect answer when an answer for each problem is input, and provide a next problem in the case of a correct answer and provide a next problem after providing the commentary information in the case of an incorrect answer when the answer for the corresponding problem is re-input. Preferably, the control unit of the learning management server may provide the commentary information of the corresponding problem before providing the next problem in the case of the correct answer when the answer for each problem is input or re-input.

Further, the study problems by type may include auxiliary operational study problems including one or more of number counting, addition, subtraction, multiplication, division, fraction, decimal, and mixed four fundamental arithmetic operations, descriptive study problems by week requiring ability of think, and global study problems set from abroad, in addition to the diagnostic study problems by subject and the level study problems by subject.

Further, in the learning result database of the learning management server, study results by day, week, and month of each student member, study time information, and study progress information may be stored, and the study results may include an incorrect answer rate for each of the study problems by type and incorrect answer information of incorrect answer problems.

Further, the student member terminal may directly set the responsible teacher during registration, and the control unit of the learning management server may automatically set the teacher member at an allocated area as the responsible teacher by using address information of the corresponding student member when the student member does not set the responsible teacher, and the manager terminal may set a change of the responsible teacher according to a correction request of the student member or the teacher member.

Further, the learning management server may further include a study time scheduling information database of the student member for each responsible teacher member, and the teacher member terminal may provide study direction information and vulnerability map information to the student member terminal in real time by using the study time scheduling information and the study result information of the responsible student member.

Further, the problem database of the learning management server may include a problem generation program, and the teacher member terminal or the manager terminal may directly register study problems by type including hint information and commentary information in the problem database by using the problem generation program or xml-transform the study problems by type at a document file format including the hint information and the commentary information to register the transformed study problems in the problem database.

Further, the learning management server may further include an interface unit which is video-accessible or chatting-accessible between the student member terminal and the teacher member terminal and between the guardian member terminal and the teacher member terminal.

Further, the control unit of the learning management server may automatically set a study amount for the level study problems by subject which are set by time according to a target study time which is set by the corresponding student member, and the teacher member terminal may change a study amount set for each student member.

Meanwhile, another aspect of the present invention provides an online learning management method including: registering members in the learning management server by the student member terminal, the teacher member terminal, or the guardian member terminal; logging into the learning management server by the registered student member terminal; a diagnostic test step of checking diagnostic study problems by subject which are set for determining levels of the student member and inputting answers for the problems by the student member terminal; a level determining step by subject of determining levels by subject set according to study results for the diagnostic test by the control unit of the learning management server; and a level learning step by subject of checking level study problems by subject which are set by time by the student member terminal according to a level by subject determined in the level determining step by subject, inputting answers for the problems, and receiving study results for the input answers.

In this case, in the level learning step by subject, the control unit of the learning management server determines level study problems by subject which are set at a next time to be provided when study results for the level study problems by subject which are set by time are a reference score or more, determines level study problems by subject which are set at a current time to be repetitively provided when the study result is less than the reference score, and determines predetermined linked level study problems by subject which are set at a previous time to be provided when the study results for the level study problems by subject which are set at a repetitively provided time are less than the reference score.

Further, the online learning management method may further include at least one step of an auxiliary operational learning step of checking auxiliary operational study problems including one or more of number counting, addition, subtraction, multiplication, division, fraction, decimal, and mixed four fundamental arithmetic operations, inputting answers for the problems, and checking study results for the answer input by the student member terminal; a learning step by week of checking descriptive study problems by week requiring ability of think, inputting answers for the problems, and checking study results for the answer input by the student member terminal; and a global learning step of checking global study problems set from abroad, inputting answers for the problems, and checking study results for the answer input by the student member terminal.

Further, in the level learning step by subject, the auxiliary operational learning step, the learning step by week, or the global learning step, the control unit of the learning management server may control to provide a next problem in the case of a correct answer and provide hint information in the case of an incorrect answer when an answer for each problem is input by the student member terminal, and provide a next problem in the case of a correct answer and provide a next problem after providing the commentary information in the case of an incorrect answer when the answer for the corresponding problem is re-input, and preferably, the control unit of the learning management server may provide the commentary information of the corresponding problem before providing the next problem in the case of the correct answer when the answer for each problem is input or re-input.

Further, in the level learning step by subject, the control unit of the learning management server may automatically set a study amount for the level study problems by subject which are set by time according to a target study time which is set by each student member.

### [Advantageous Effects]

Therefore, as configured above, an online learning management system according to the present invention enables: respective student members to begin studying at levels appropriate for each student member in respective subjects by setting suitable questions for the academic standards of the student members and by conducting systematic management according to the learning results; and balanced study to be carried out without being biased towards one subject within a set period such that the academic achievements of student members can be maximized.

### [Description of Drawings]

FIG. 1 is a concept diagram of an online learning management system according to an exemplary embodiment of the present invention.
FIG. 2 is a block diagram illustrating a configuration of a learning management server of FIG. 1.
FIG. 3 is a flowchart of an online learning management method according to another exemplary embodiment of the present invention.
FIG. 4 is a diagram illustrating an online learning management process according to yet another exemplary embodiment of the present invention.
FIG. 5 is a diagram illustrating a diagnostic test process according to an exemplary embodiment of the present invention.
FIG. 6 is a diagram illustrating a learning process for level study problems by subject according to an exemplary embodiment of the present invention.
FIG. 7 is a diagram illustrating a screen of providing auxiliary operational study problems according to an exemplary embodiment of the present invention.
FIG. 8 is a diagram illustrating a screen of providing study problems by week according to an exemplary embodiment of the present invention.
FIG. 9 is a diagram illustrating a screen of providing study time scheduling information according to an exemplary embodiment of the present invention.
FIG. 10 is a diagram illustrating a screen of providing study detail information of a student member according to an exemplary embodiment of the present invention.

### [Modes of the Invention]

Hereinafter, an exemplary embodiment of the present invention will be described in more detail with reference to the accompanying drawings.

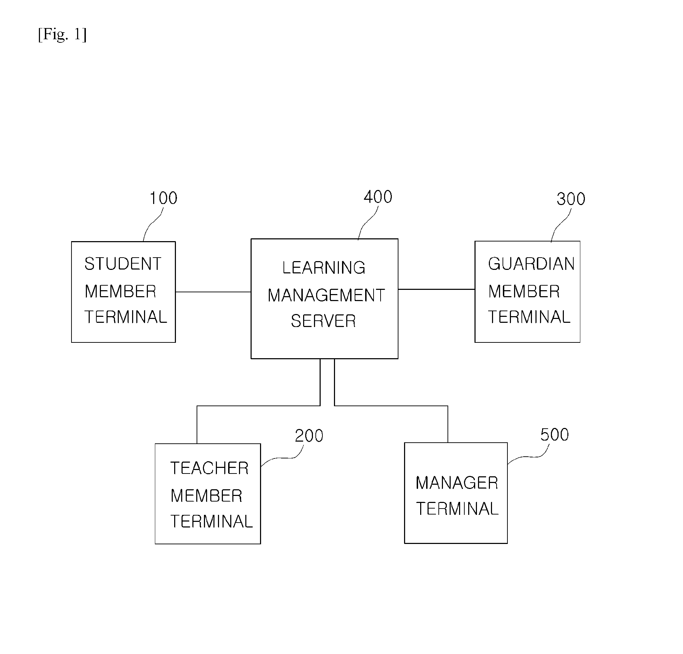

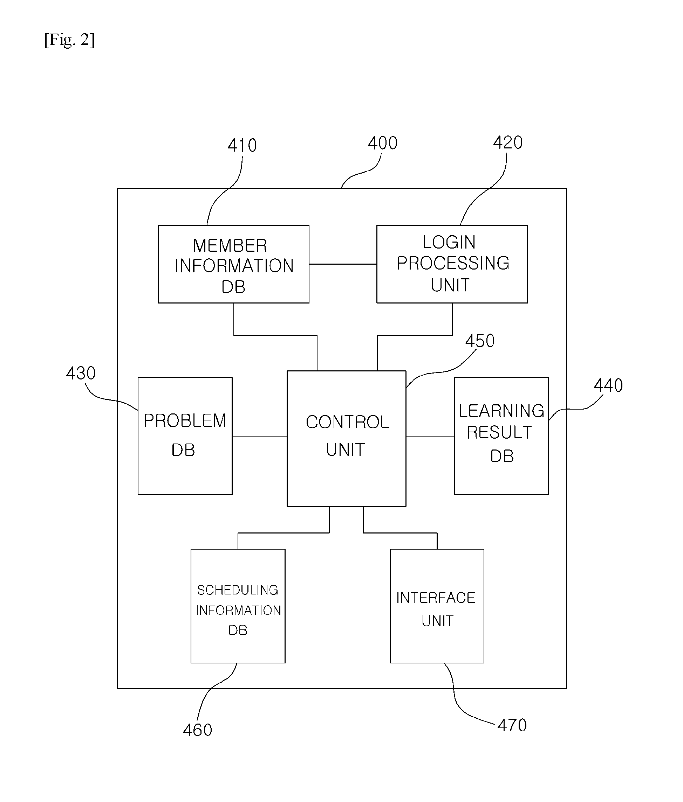

As illustrated in FIGS. 1 and 2, an online learning management system according to the present invention includes: a student member terminal 100 which can search for study problems by type and can input answers in a learning management server 400 by logging into the learning management server 400, and which can check study results on the inputted answers for respective problems; a teacher member terminal 200 which can input the study problems by type and solutions for the respective problems in the learning management server 400 by logging into the learning management server 400, and which can check study results of a student member for which the teacher member is responsible; a guardian member terminal 300 which can check the study results for the student member under the care of the guardian member by logging into the learning management server 400; and the learning management server 400 which includes a member information database 410 for storing member registration information for the logging-in of the student member terminal, the teacher member terminal, and the guardian member terminal, a login processing unit 420 for processing the logging-in of the terminals through the member registration information of the member information database, a problem database 430 for storing study problems by type and solutions for the respective problems, a learning result database 440 for storing study results of respective student members, and a control unit 450 which provides information selected according to the usage rights through the logging-in of the terminals by being connected to the member information database 410, the login processing unit 420, the problem database 430, and the learning result database 440 and controls the provision, to the student member terminal 100, of level study problems by subject which are set according to study results for diagnostic study problems by subject which are set to determine a level of the student member among the study problems by type.

Particularly, the control unit 450 of the learning management server 400 determines linked level study problems by subject according to the study results for the level study problems by subject, which are set by time. Preferably, in the control unit of the learning management server, the determining of the linked level study problems by subject which are next set is to determine level study problems by subject which are set at a next time to be provided when study results for the set level study problems by subject are reference score or more, determine level study problems by subject which are set at a current time to be repetitively provided when the study result is less than the reference score, and determine predetermined linked level study problems by subject which are set at a previous time to be provided when the study results for the level study problems by subject which are set at a repetitively provided time are less than the reference score. As a result, the study problems by subject are individually provided, but study levels by subject of mathematics may be improved in balance by automatically controlling a study speed at a level suitable for each student member. That is, since appropriate problems may be automatically provided according to the study result of the student member, an insufficient part may be compensated. Here, the set level study problems by subject include a predetermined number of problems. That is, the set level study problems by subject mean one set of the level study problems by subject including a predetermined number of problems. Further, each set is divided at the same level by subject in stages.

Further, the control unit 450 of the learning management server 400 automatically sets a study amount for the level study problems by subject which are set by time according to a target study period which is set by the corresponding student member, and in this case, the teacher member terminal 200 may change the study amount set for each student member.

In this case, the learning management system according to the present invention may further include a manager terminal 500 which can inquire register information and the study result of all members (the student members, the teacher members, and the guardian members) and input, correct, or delete the study problems by type and the answer of each problem to the learning management server 400, by logging into the learning management server 400. In other words, the manager terminal 500 may perform a function of uploading, correcting, or deleting supportable contents such as the study problems by type and the answer of each problem and inquire and manage a register situation and a study situation of all of the members. Particularly, the managing of all of the members means performing registration and withdrawal of each member, a study cost settling service of the student members, and a change service of assignments for a responsible teacher, a lecture cost paying service for each teacher member, and a consulting service with each member. Further, the member information database 410 of the learning management server 400 may store member registration information for the logging-in of the manager terminal 500.

Further, the level study problems by subject may be configured by five level study problems by subject for number and arithmetic problems, figure problems, measurement problems, probability and statistics problems, and regularity problems. Here, the number and arithmetic problems are number counting and operational problems, the figure problems are problems regarding figures, the measurement problems are problems for measuring a distance, a weight, a volume, and the like, the probability and statistics problems are problems regarding probability and statistics, and the regularity problems are problems requiring logical thinking of regularity and problem solution. However, here, the level study problems by subject are classified into five subjects, but are not limited thereto, and it goes without saying that the level study problems by subject may be variously classified into various subjects.

Further, the study problems by type further include hint information and commentary information for each problem, and the control unit 450 of the learning management server 400 may control to provide a next problem in the case of a correct answer and provide hint information in the case of an incorrect answer when an answer for each problem is input, and provide a next problem in the case of a correct answer and provide a next problem after providing the commentary information in the case of an incorrect answer when the answer for the corresponding problem is re-input. Preferably, the control unit 450 of the learning management server 400 provides the commentary information of the corresponding problem before providing the next problem in the case of the correct answer when the answer for each problem is input or re-input. Herein, the case where it is treated as the incorrect answer means a case where the incorrect answer is input or the answer is not input within a predetermined time limit (for example, two minutes).

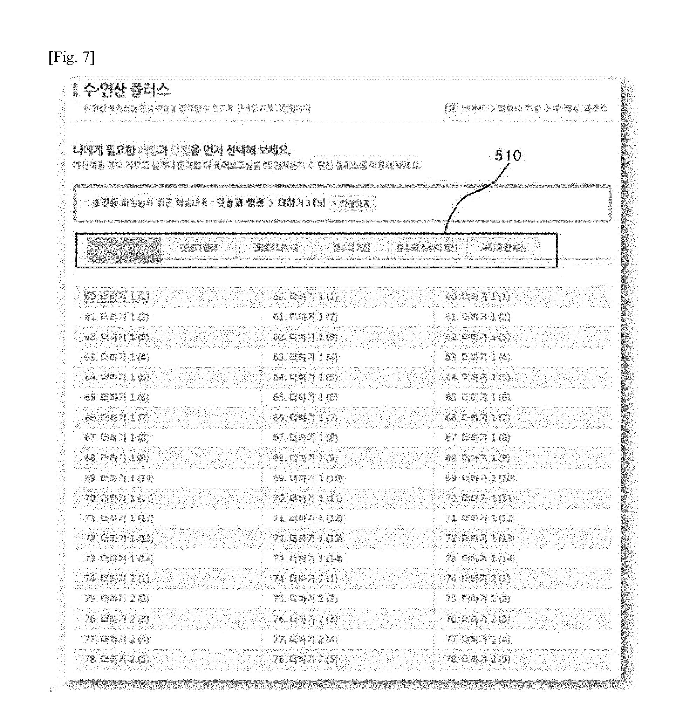

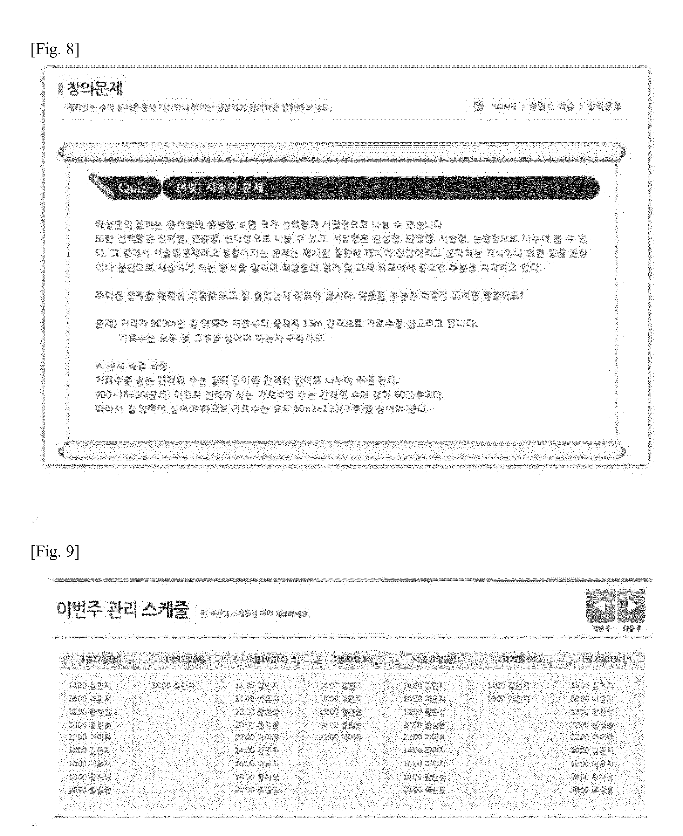

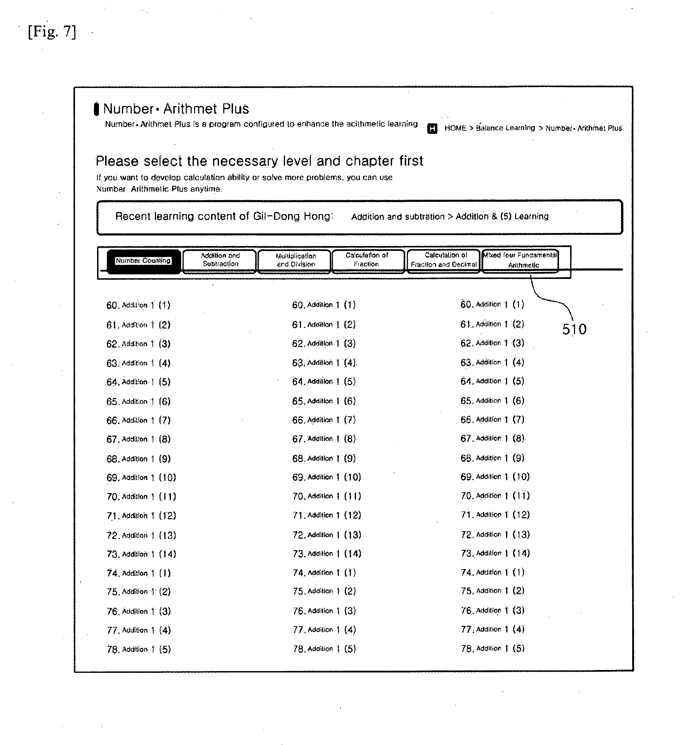

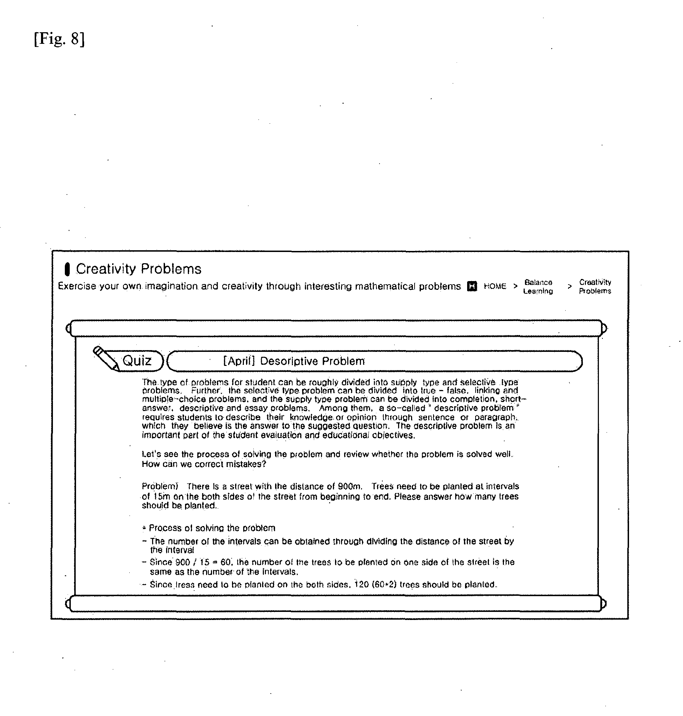

Here, the study problems by type may include auxiliary operational study problems including one or more of number counting, addition, subtraction, multiplication, division, fraction, decimal, and mixed four fundamental arithmetic operations for reinforcing a separate numeral and operational study, descriptive study problems by week requiring ability of think, and global study problems set from abroad, in addition to the diagnostic study problems by subject and the level study problems by subject. For example, the auxiliary operational study problems may provide problems set according to categories 510 of number counting, addition and subtraction, multiplication and division, calculation of fractions, calculation of fractions and decimals, and mixed four fundamental arithmetic operations, as illustrated in FIG. 7. Further, problems of each provided category are classified into a plurality of patterns (for example, 1,528) according to difficulty, and each pattern includes a predetermined amount of problems. Further, the control unit 450 may provide problems to be randomly arranged with respect to each pattern. Further, the plurality of patterns may be set to be sequentially configured with study association. Further, the study problems by week may be configured so that the responsible teacher member checks an answer and commands comment transmission and the student member may check the answer, when the descriptive problem is presented and the student member marks (inputs) the answer with a comment format, as illustrated in FIG. 8. In this case, the student member can input query matters to the responsible teacher member, and as a result, the teacher member may input question and answer to the student member and perform 1:1 interactive video learning. Further, the global study problems may be provided by 10 items per week through the control unit of the learning management server, as study problems matched with a curriculum of Korea by analyzing nine mathematical curriculums of United States, Japan, China, France, Singapore, India, United Kingdom, Taiwan, and Germany.

Further, the student member terminal 100, the teacher member terminal 200, the guardian member terminal 300, and the manager terminal 500 are terminals which is accessible online to the learning management server by using a communication mode such as Internet, and a desktop computer, a laptop computer, a portable computer, a tablet computer, and the like may be used.

Further, in the learning result database 440 of the learning management server 400, study results by day, week, and month of each student member, study time information, and study progress information are stored, and in this case, the study results include an incorrect answer rate for each of the study problems by type and incorrect answer information of incorrect answer problems. As a result, the student member terminal 100 may check study results (by day, week, and month), a study time, and study progress information of the student member. Similarly, the guardian member terminal 300 may check study results (by day, week, and month), a study time, and study progress information of the guarded student member.

Meanwhile, the guardian member terminal 300 may settle study cost of the guarded student member through the learning management server 400.

Further, the student member terminal 100 can directly set the responsible teacher during registration, and the control unit 450 of the learning management server 400 automatically sets the teacher member at an allocated area as the responsible teacher by using address information of the corresponding student member when the student member does not set the responsible teacher, and the manager terminal 500 can set a change of the responsible teacher according to a correction request of the student member or the teacher member. Further, in the case where there is no teacher member at the allocated area when the teacher member is automatically set, the teacher member in a predetermined area (for example, in Seoul) may be automatically set.

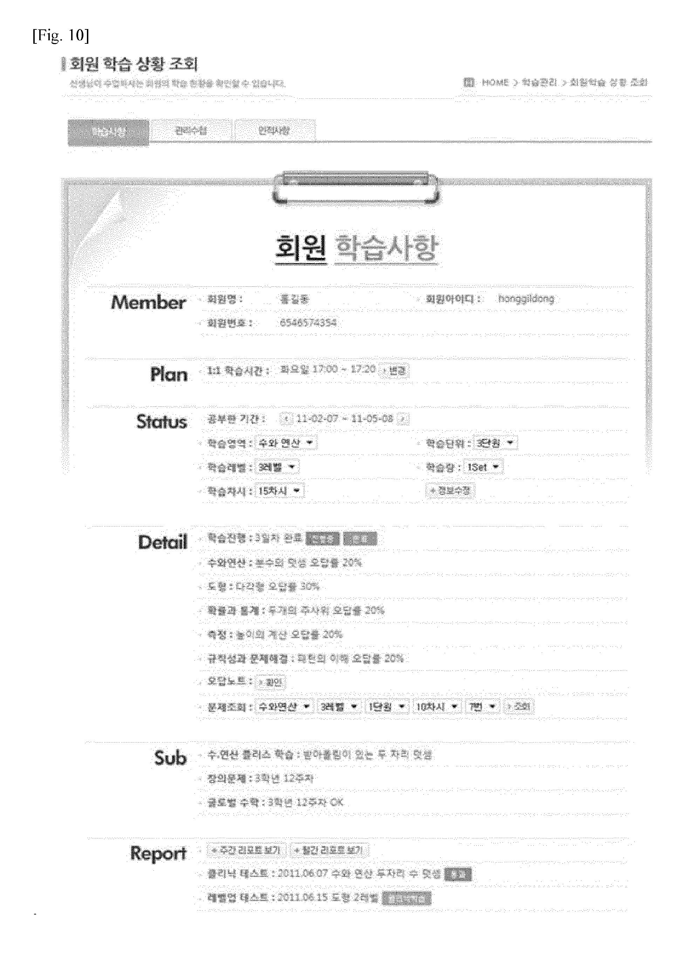

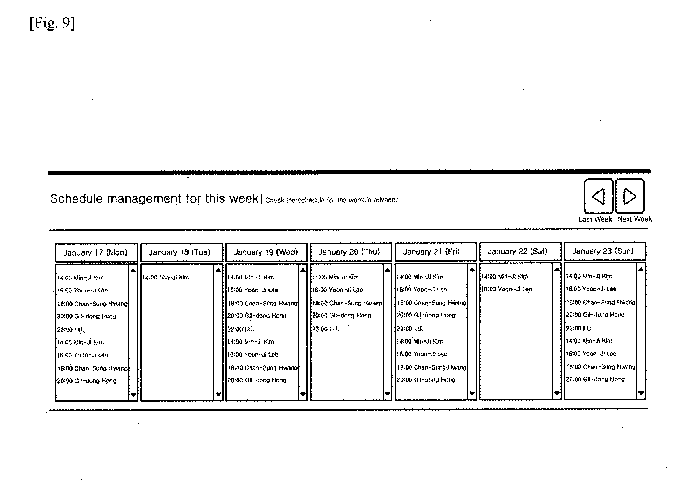

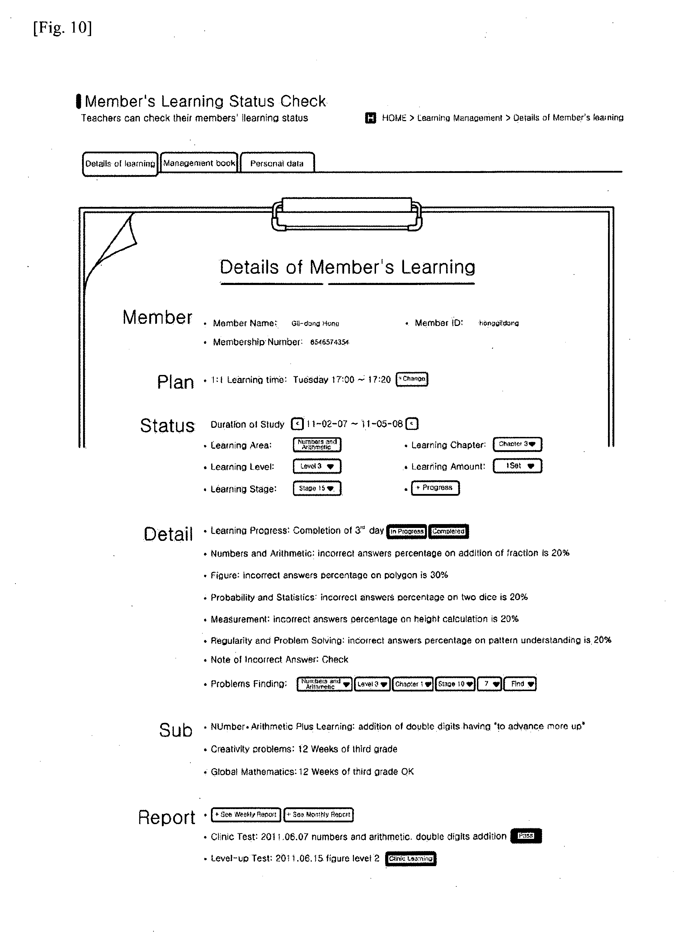

Further, the learning management server 400 further includes a study time scheduling information database 460 of the student member for each responsible teacher member, and the teacher member terminal 200 may provide study direction information and vulnerability map information to the student member terminal 100 in real time by using the study time scheduling information and the study result information of the responsible student member. For example, the study time scheduling information may be represented by week and by time as illustrated in FIG. 9. Further, when each student member is selected, as illustrated in FIG. 10, member information (for example, a member name, a member ID, and a member number) for the selected student member, study plan information (for example, a scheduled study time), study state information (for example, a studying period, a study subject, a study unit, and a study amount), and detailed study situation information (for example, a incorrect answer rate for each subject, an incorrect answer note (input by the corresponding student member), an auxiliary study problem progress situation, and a study result report) may be represented.

Further, the problem database 430 of the learning management server 400 includes a problem generation program, and the teacher member terminal 200 or the manager terminal 500 directly registers study problems by type including hint information and commentary information in the problem database 430 by using the problem generation program or may xml-transform the study problems by type at a document file format including the hint information and the commentary information to register the transformed study problems in the problem database 430. Further, the teacher member terminal 200 or the manager terminal 500 may also correct and delete the registered information.

Further, the learning management server 400 may further include an interface unit 470 which is video-accessible or chatting-accessible between the student member terminal 100 and the teacher member terminal 200 and between the guardian member terminal 300 and the teacher member terminal 200.

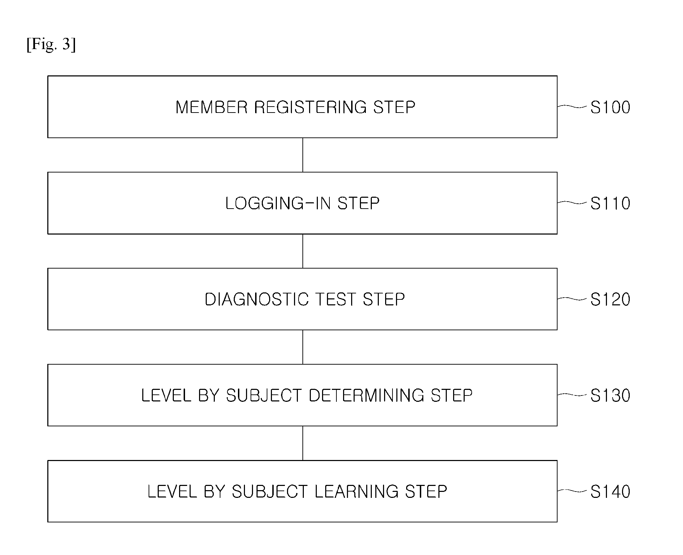

Meanwhile, as illustrated in FIG. 3, an online learning management method according to the present invention includes registering members in the learning management server 400 by the student member terminal 100, the teacher member terminal 200, or the guardian member terminal 300 (S100); logging into the learning management server 400 by the registered student member terminal 100 (S110); a diagnostic test step of checking diagnostic study problems by subject which are set for determining levels of the student member and inputting answers for the problems by the student member terminal 100 (S120); a level determining step by subject of determining levels by subject set according to study results for the diagnostic test by the control unit 450 of the learning management server 400 (S130); and a level learning step by subject of checking level study problems by subject which are set by time by the student member terminal 100 according to a level by subject determined in the level determining step by subject (S130), inputting answers for the problems, and receiving study results for the input answers (S140).

In this case, in the level learning step by subject (S140), the control unit 450 of the learning management server 400 determines level study problems by subject which are set at a next time to be provided when study results for the level study problems by subject which are set by time are a reference score or more, determines level study problems by subject which are set at a current time to be repetitively provided when the study result is less than the reference score, and determines predetermined linked level study problems by subject which are set at a previous time to be provided when the study results for the level study problems by subject which are set at a repetitively provided time are less than the reference score. Here, in the member registering step (S100), study cost settlement and teacher assignment may be processed.

In this case, the online learning management method according to the present invention may further include at least one step of an auxiliary operational learning step of checking auxiliary operational study problems including one or more of number counting, addition, subtraction, multiplication, division, fraction, decimal, and mixed four fundamental arithmetic operations for reinforcing a separate numeral and operational study, inputting answers for the problems, and checking study results for the answer input by the student member terminal 100; a learning step by week of checking descriptive study problems by week requiring ability of think, inputting answers for the problems, and checking study results for the answer input by the student member terminal 100; and a global learning step of checking global study problems set from abroad, inputting answers for the problems, and checking study results for the answer input by the student member terminal 100.

Further, in the level learning step by subject (S140), the auxiliary operational learning step, the learning step by week, or the global learning step, the control unit 450 of the learning management server 400 may control to provide a next problem in the case of a correct answer and provide hint information in the case of an incorrect answer when an answer for each problem is input by the student member terminal 100, and provide a next problem in the case of a correct answer and provide a next problem after providing the commentary information in the case of an incorrect answer when the answer for the corresponding problem is re-input. Here, it is preferred that the control unit 450 of the learning management server 400 provides the commentary information of the corresponding problem before providing the next problem in the case of the correct answer when the answer for each problem is input or re-input.

Further, in the level learning step by subject (S140), the control unit 450 of the learning management server 400 may automatically set a study amount for the level study problems by subject which are set by time according to a target study time which is set by each student member.

### [Example 1]

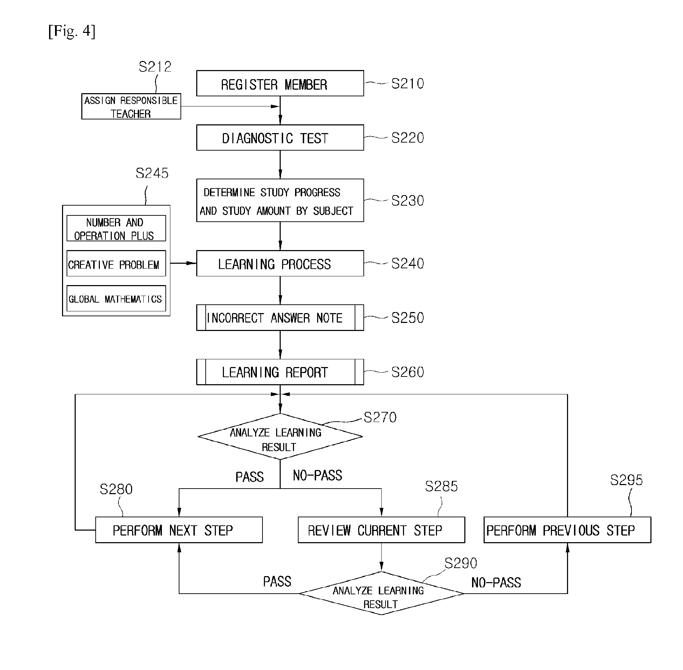

As a preferable exemplary embodiment, in an online learning management method according to the present invention, as illustrated in FIG. 4, when the student member is registered to the learning management server 400 (S210), the student member is subjected to a diagnostic test by using diagnostic study problems by subject (S220). In this case, a responsible teacher is assigned (S212) after the member is registered (S210). A study progress of the study level set according to a diagnostic test result is determined, and further, a study amount is determined according to a target study period set by the student member (S230), and the study using the level study problems by subject is performed (S240). In this case, an auxiliary study using the auxiliary operational study problems (numeral operation plus), the study problems by week (creative problems), and the global study problems (global mathematics) may be performed together (S245). In this case, result values of the study process are transferred to the assigned responsible teacher, and information on the study process may be transferred to the student member and the guardian member by various methods using the transferred result values. After the study process (S240), an incorrect answer note according to the incorrect answer information of the student member is stored (S250), and study result reports by day, week, and month are prepared (S260). Further, the study results for the level study problems by subject according the study process are analyzed (S270). If the study results are a reference score or more (that is, pass), a next step is performed so that the study process for the level study problems by subject which are set at the next time is performed(S280), and if the study results are less than the reference score (that is, no-pass), a current step is reviewed so that the study process for the level study problems by subject which are set at the current time is performed(S285). Further, the study results are analyzed according to the review of the current step (S290), and as a result, during passing, the next step is performed (S280), and during no-passing, the previous step is performed so that the study process for the linked level study problems by subject which are set at the previous time is performed(S295). Here, the linking is performed by setting and means that relation with the corresponding problem is high. Therefore, the linked level study problems by subject which are set at the previous time may be level study problems by subject which are set at a just previous time, or may be level study problems by subject which are set at a time before several sets.

### [Example 2]

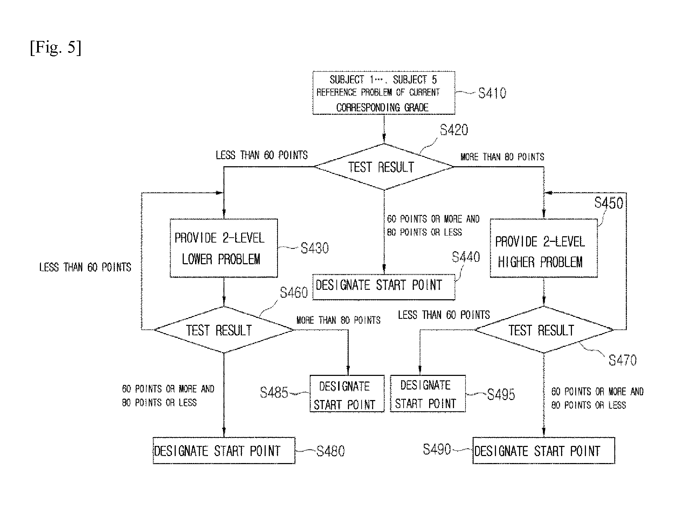

As a preferable exemplary embodiment, in the determining of the study levels according to the diagnostic study problems by subject, as illustrated in FIG. 5, when diagnostic study problems (reference problems) by subject at a reference level set by grade are given (S410), according to a test result (S420), in the case of less than 60 points, 2-level lower problems are provided again (S430), in the case of 60 points or more and 80 points or less, a current reference level is designated as a start point for solving the level study problems by subject (S440), and in the case of more than 80 points, 2-level higher problems are provided again (S450). Further, a test result for the step S430 is performed (S460), and as a result, in the case of less than 60 points, the step S430 is repeated again, in the case of 60 points or more and 80 points or less, the corresponding level is designated as a start point for solving the level study problems by subject (S480), and in the case of more than 80 points, 1-level higher levels are designated as the start point (S485). Further, a test result for the step S450 is performed (S470), and as a result, in the case of less than 60 points, 1-level lower levels are designated as the start point, in the case of 60 points or more and 80 points or less, the corresponding level is designated as a start point for solving the level study problems by subject, and in the case of more than 80 points, the step S450 is repeated.

### [Example 3]

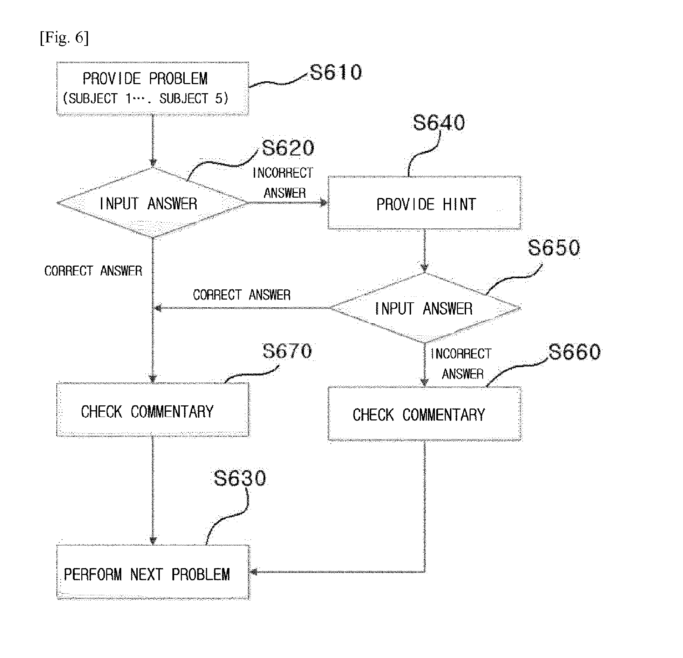

Further, as a preferable exemplary embodiment, a process of performing daily learning by using the level study problems by subject is as illustrated in FIG. 6. That is, if the level study problems by subject are given (S610), the student member inputs an answer (S620). According to the answer input, in the case of a correct answer, the next problem is performed (S630), and in the case of an incorrect answer, hint information is provided to the student member (S640). Subsequently, the student member inputs a re-answer by providing the hint information (S650). According to the re-answer input, in the case of a correct answer, the next problem is performed (S630), and in the case of an incorrect re-answer, commentary information is provided (S660) and then the next problem is performed (S630). Here, preferably, in steps S620 and S650, in the case of the correct answer, the commentary information may be provided (S670) before the next problem is performed (S630). Further, the provided next problem is performed by the same method from step S610. In this case, study results including incorrect answer information, incorrect answer recording information, incorrect answer rate information, and the corresponding progress information of the student member are stored in the learning management server 400. Meanwhile, the incorrect answer is treated when the incorrect answer is input within a predetermined time limit or the answer is not input within the time limit.

According to the present invention described above, in the online learning system, the academic achievements of student members can be maximized by setting suitable questions for the academic standards of the student members, conducting systematic management according to the learning results, and adding 1 : 1 video learning management. Further, the guardian member and the responsible teacher member frequently check the learning results of the corresponding student member and feedback the checked learning results to the student member such that motivation of learning can be clarified to the student member. Further, the teacher member may systematically manage the responsible student members.

Hereinabove, the present invention has been described with reference to the drawings and the embodiments, but the present invention is not limited to a specific embodiment and it will be appreciated by those skilled in the art that a lot of modification and transformations can be made without departing from the scope of the present invention. Further, the drawings are illustrated for helping appreciation of the present invention and should not be appreciated to limit the claims.

### [Explanation of Reference Numerals]

100: Student member terminal 200: Teacher member terminal
300: Guardian member terminal 400: Learning management server
410: Member information DB 420: Login processing unit
430: Problem DB 440: Learning result DB
450: Control unit 460: Study time scheduling information DB
470: Interface unit 500: Manager terminal

## Claims

1. An online learning management system, comprising:
a student member terminal which can search for study problems by type and can input answers in a learning management server by logging into the learning management server, and which can check study results on the inputted answers for respective problems;
a teacher member terminal which can input the study problems by type and solutions for the respective problems in the learning management server by logging into the learning management server, and which can check study results of a student member for which the teacher member is responsible;
a guardian member terminal which can check the study results for the student member under the care of the guardian member by logging into the learning management server; and
the learning management server which includes a member information database for storing member registration information for the logging-in of the student member terminal, the teacher member terminal, and the guardian member terminal, a login processing unit for processing the logging-in of the terminals through the member registration information of the member information database, a problem database for storing study problems by type and solutions for the respective problems, a learning result database for storing study results of respective student members, and a control unit which provides information selected according to the usage rights through the logging-in of the terminals by being connected to the member information database, the login processing unit, the problem database, and the learning result database, in which the control unit controls the provision, to the student member terminal, of level study problems by subject which are set according to study results for diagnostic study problems by subject which are set to determine a level of the student member among the study problems by type,
wherein the control unit of the learning management server may determine linked level study problems by subject according to the study results for the level study problems by subject, which are set by time.

2. The online learning management system of claim 1, wherein in the control unit of the learning management server, the determining of the linked level study problems by subject which are next set is to determine a level study problem by subject which is set at a next time to be provided when a study result for the set level study problem by subject is a reference score or more, determine a level study problem by subject which is set at a current time to be repetitively provided when the study result is less than the reference score, and determine a predetermined linked level study problem by subject which is set at a previous time to be provided when the study result for the level study problem by subject which is set at a repetitively provided time is less than the reference score.

3. The online learning management system of claim 1, further comprising:
a manager terminal which can inquire register information and the study result of all members and input, correct, or delete the study problems by type and the answer of each problem to the learning management server, by logging into the learning management server.

4. The online learning management system of claim 1, wherein the level study problems by subject is configured by five level study problems by subject of mathematics for number and arithmetic problems, figure problems, measurement problems, probability and statistics problems, and regularity problems.

5. The online learning management system of claim 2, wherein the study problems by type further include hint information and commentary information for each problem, and the control unit of the learning management server controls to provide a next problem in the case of a correct answer and provide hint information in the case of an incorrect answer when an answer for each problem is input, and provide a next problem in the case of a correct answer and provide a next problem after providing the commentary information in the case of an incorrect answer when the answer for the corresponding problem is re-input.

6. The online learning management system of claim 5, wherein the control unit of the learning management server provides the commentary information of the corresponding problem before providing the next problem in the case of the correct answer when the answer for each problem is input or re-input.

7. The online learning management system of claim 5, wherein the study problems by type include auxiliary operational study problems including one or more of number counting, addition, subtraction, multiplication, division, fraction, decimal, and mixed four fundamental arithmetic operations, descriptive study problems by week requiring ability of think, and global study problems set from abroad, in addition to the diagnostic study problems by subject and the level study problems by subject.

8. The online learning management system of claim 1, wherein in the learning result database of the learning management server, study results by day, week, and month of each student member, study time information, and study progress information are stored, and the study results include an incorrect answer rate for each of the study problems by type and incorrect answer information of incorrect answer problems.

9. The online learning management system of claim 1, wherein the student member terminal can directly set the responsible teacher during registration, and the control unit of the learning management server automatically sets the teacher member at an allocated area as the responsible teacher by using address information of the corresponding student member when the student member does not set the responsible teacher, and the manager terminal can set a change of the responsible teacher according to a correction request of the student member or the teacher member.

10. The online learning management system of claim 1, wherein the learning management server further includes a study time scheduling information database of the student member for each responsible teacher member, and the teacher member terminal provides study direction information and vulnerability map information to the student member terminal in real time by using the study time scheduling information and the study result information of the responsible student member.

11. The online learning management system of claim 1, wherein the problem database of the learning management server includes a problem generation program, and the teacher member terminal or the manager terminal directly registers study problems by type including hint information and commentary information in the problem database by using the problem generation program or xml-transforms the study problems by type at a document file format including the hint information and the commentary information to register the transformed study problems in the problem database.

12. The online learning management system of claim 9, wherein the learning management server further includes an interface unit which is video-accessible or chatting-accessible between the student member terminal and the teacher member terminal and between the guardian member terminal and the teacher member terminal.

13. The online learning management system of claim 1, wherein the control unit of the learning management server automatically sets a study amount for the level study problems by subject which are set by time according to a target study time which is set by the corresponding student member, and the teacher member terminal changes a study amount set for each student member.

14. An online learning management method, comprising:
registering members in the learning management server by the student member terminal, the teacher member terminal, or the guardian member terminal; logging into the learning management server by the registered student member terminal;
a diagnostic test step of checking diagnostic study problems by subject which are set for determining levels of the student member and inputting answers for the problems by the student member terminal;
a level determining step by subject of determining levels by subject set according to study results for the diagnostic test by the control unit of the learning management server; and
a level learning step by subject of checking level study problems by subject which are set by time by the student member terminal according to a level by subject determined in the level determining step by subject, inputting answers for the problems, and receiving study results for the input answers, wherein in the level learning step by subject, the control unit of the learning management server determines level study problems by subject which are set at a next time to be provided when study results for the level study problems by subject which are set by time are a reference score or more, determines level study problems by subject which are set at a current time to be repetitively provided when the study result is less than the reference score, and determines predetermined linked level study problems by subject which are set at a previous time to be provided when the study results for the level study problems by subject which are set at a repetitively provided time are less than the reference score.

15. The online learning management method of claim 14, further comprising:
an auxiliary operational learning step of checking auxiliary operational study problems including one or more of number counting, addition, subtraction, multiplication, division, fraction, decimal, and mixed four fundamental arithmetic operations, inputting answers for the problems, and checking study results for the answer input by the student member terminal; a learning step by week of checking descriptive study problems by week requiring ability of think, inputting answers for the problems, and checking study results for the answer input by the student member terminal; and a global learning step of checking global study problems set from abroad, inputting answers for the problems, and checking study results for the answer input by the student member terminal.

16. The online learning management method of claim 15, wherein in the level learning step by subject, the auxiliary operational learning step, the learning step by week, or the global learning step, the control unit of the learning management server controls to provide a next problem in the case of a correct answer and provide hint information in the case of an incorrect answer when an answer for each problem is input by the student member terminal, and provide a next problem in the case of a correct answer and provide a next problem after providing the commentary information in the case of an incorrect answer when the answer for the corresponding problem is re-input.

17. The online learning management method of claim 16, wherein in the level learning step by subject, the auxiliary operational learning step, the learning step by week, or the global learning step, the control unit of the learning management server provides the commentary information of the corresponding problem before providing the next problem in the case of the correct answer when the answer for each problem is input or re-input.

18. The online learning management method of claim 14, wherein in the level learning step by subject, the control unit of the learning management server automatically sets a study amount for the level study problems by subject which are set by time according to a target study time which is set by each student member.
